Europäisches Patentamt

European Patent Office

Office européen des brevets

(19)

(11) **EP 0 926 517 A1**

(12) **DEMANDE DE BREVET EUROPEEN**

(43) Date de publication:
**30.06.1999 Bulletin 1999/26**

(51) Int. Cl.$^6$: **G02B 6/16**, G02B 6/34,
C03C 27/02

(21) Numéro de dépôt: **98403155.9**

(22) Date de dépôt: **15.12.1998**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **16.12.1997 FR 9715938**

(71) Demandeur: **FRANCE TELECOM
75015 Paris (FR)**

(72) Inventeurs:
• **Poignant, Hubert
22300 Ploulec'h (FR)**
• **Fleury, Valérie
22000 Saint Brieuc (FR)**
• **Le Meillot, Joel
Landrellec, 22560 Pleumeur-Bodou (FR)**

(74) Mandataire: **Texier, Christian
Cabinet Regimbeau,
26, Avenue Kléber
75116 Paris (FR)**

(54) **Procédé de réalisation d'un dispositif de stabilisation de réseau de bragg vis à vis de la température**

(57) L'invention concerne un procédé de réalisation d'un dispositif de stabilisation d'un réseau de Bragg vis à vis de la température, du type à deux matériaux ayant des coefficients de dilatation éloignés, ce procédé comportant les étapes consistant à :

- fournir un verre (200,300) et un métal (100) aptes à

se fixer l'un à l'autre par réaction chimique entre eux dans une plage de température appropriée ;

- mettre en contact ce verre (200,300) et ce (100) métal à une température comprise dans cette plage de température appropriée afin qu'ils se fixent l'un à l'autre.

*FIG.1*

## Description

La présente invention concerne les dispositifs permettant de réduire la dérive naturelle de la longueur d'onde de résonance ou de Bragg en fonction de la température dans les réseaux de Bragg photoinscrits dans les libres optiques, et plus précisément de tels dispositifs fonctionnant sur un principe de dilatations différentielles entre deux matériaux.

L'invention trouva application dans tous les dispositifs incorporant des réseaux de Bragg où l'on souhaite que les caractéristiques de ces réseaux soient stables vis à vis de la température.

Réalisés pour la première fois en 1978 par K.O. Hill, les réseaux de Bragg photoinscrits dans le coeur de fibres optiques ou de guides planaires ont, vers 1989, été fabriqués par irradiation ultra-violette (190-250 nm) transverse des fibres optiques. Cette technique est décrite dans le document référencé [1].

Ces composants ont aujourd'hui un développement intensif qui est dû notamment à la multiplicité des applications dans lesquels ils sont introduits.

On les trouve ainsi dans le domaine des télécommunications optiques, comme par exemple pour le multiplexage en longueur d'onde, pour la compensation de dispersion chromatique des fibres optiques, pour la stabilisation et l'aplatissement du gain d'amplificateurs optiques pour la stabilisation en fréquence de lasers à semi-conducteurs, et plus généralement dans les lasers à fibres et dans divers filtres.

On les trouve également dans le domaine des capteurs, par exemple des capteurs de température ou de contraintes

Les réseaux de Bragg présentent l'inconvénient majeur de présenter des caractéristiques sensibles aux variations de température.

Ainsi, la longueur d'onde de Bragg $\lambda_B$ d'un réseau uniforme est donnée par la relation suivante :

$\lambda_B = 2 \, n_{off} \, x \wedge$ , où $n_{off}$ et $\wedge$ désignent respectivement un indice de réfraction effectif de mode guidé et un pas du réseau.

Sous l'effet d'une fluctuation de température $\delta T$, la longueur d'onde $\lambda_B$ d'un réseau libre subit une variation $\delta\lambda_B$ donnée par la relation :

$\delta\lambda_B/\delta T = (\alpha + \xi).\lambda_B$ , où $\alpha$ et $\xi$ représentent le coefficient de dilation thermique et le coefficient thermo-optique du verre de coeur, et ont généralement pour valeurs respectives $0,5.10^{-6} \, K^{-1}$ et $7.10^{-6} \, K^{-1}$ .

Ainsi, pour un réseau libre inscrit ayant une longueur d'onde à 20°C et à l'état non-prétendu d'environ 1550 nm, la longueur d'onde de Bragg $\lambda_B$ se déplace d'environ 1,2 nm pour une variation de température de 100°C.

Pour de nombreuses applications, les variations des caractéristiques des réseaux, dues aux fluctuations thermiques, sont à proscrire, et il est nécessaire de prévoir des dispositifs permettant de remédier à cet inconvénient.

Dans le domaine des télécommunications optiques par exemple, on requiert de manière générale une grande stabilité des caractéristiques des réseaux, et ce dans une gamme de températures pouvant s'étendre de -20°C à 80°C.

On a proposé différents dispositifs visant à stabiliser la longueur d'onde de Bragg ou de résonance d'un réseau de Bragg vis à vis de la température.

On a proposé des systèmes actifs, comme par exemple des dispositifs comportant des éléments de type Peltier, dans lesquels on mesure en permanence la longueur d'onde de Bragg, et on la corrige par contraintes mécaniques.

Ces systèmes sont coûteux et volumineux.

D'une manière générale, on privilégie des dispositifs appelés passifs.

On connaît aujourd'hui deux types de dispositifs passifs permettant de réduire la sensibilité à la température de la longueur d'onde de Bragg des réseaux.

Un premier type de dispositif présente un matériau-support à coefficient de dilatation thermique négatif sur lequel le réseau de Bragg est collé avec une prétension choisie.

Lors d'une élévation de température, le matériau-support à coefficient de dilatation négatif se contracte et provoque ainsi un relâchement de la prétension initiale appliquée au réseau lors de sa fixation. Le matériau-support tend donc à stabiliser la longueur d'onde de Bragg autour de sa valeur initiale.

Ainsi, on a proposé, dans le document [2], d'utiliser comme matériau à coefficient de dilatation négatif un copolymère orienté. On a également proposé, dans le document [3], d'utiliser comme matériau-support certaines vitro-céramiques, dont la fabrication en est encore au stade du laboratoire.

Les dispositifs de ce premier type présentent deux inconvénients majeurs. Ainsi, le coefficient de dilatation thermique doit être parfaitement ajusté et doit être constant d'un échantillon de matériau à un autre, ce qui est difficilement réalisable en pratique. D'autre part, pour de tels matériaux, un usinage s'avère difficilement réalisable sans altérer les propriétés du matériau, et notamment sans entrainer une modification de son coefficient de dilatation thermique.

Un deuxième type de dispositif de stabilisation pour réseau de Bragg vis à vis de la température fonctionne sur le principe de dilatations différentielles. Dans ces dispositifs, on dispose deux éléments dont les matériaux constitutifs ont des coefficients de dilatation thermique éloignés, de manière à produire un relâchement d'une prétension initiale du réseau lors d'une élévation de température.

On ainsi proposé, dans les documents référencés [4], [5], [6], et [7], d'associer l'aluminium comme matériau à coefficient de dilatation le plus fort, avec l'Invar, la silice, l'acier inox ou le fer comme matériau à coefficient de dilatation le plus faible.

Ces dispositifs sons particulièrement longs et fastidieux à réaliser. Leur réalisation nécessite un nombre élevé d'étapes technologiques. Par ailleurs, ces dispositifs peuvent présenter de nombreux points de collage, notamment entre le métal et le verre, et la tenue à long terme de ces collages s'avère alèatoire.

Leur réalisation nécessiterait un controle précis d'une prétension du réseau liée à un écartement entre deux plots de fixation extrêmes d'une fibre portant le réseau de Bragg. Ce contrôle est particulièrement difficile à réaliser avec la précision souhaitée.

Le but principal de la présente invention est de proposer un procédé de réalisation de dispositifs de stabilisation à la température de réseaux de Bragg, du type à dilatation différentielle, qui soit de mise en oeuvre particulièrement aisée, qui permette un contrôle précis de l'espacement entre deux plots de fixation du réseau, qui permette de réaliser des dispositifs dont lesquels les points de collage se limitent à des points de collage de deux extrémités du réseau.

Un autre but de l'invention est de proposer un procédé permettant de réaliser des dispositifs particulièrement performants en termes de stabilisation des réseaux, et particulièrement fiables vis à vis de ces performances.

Un autre but de l'invention est de proposer un procédé permettant d'associer des plots en verte et un support en métal sans utiliser de collage classique.

Un autre but de l'invention est de proposer un procédé permettant de réaliser des dispositifs monoblocs, compacts, robustes, et d'encombrement faible.

Ces buts sont atteints selon la présente invention grâce à un procédé de réalisation d'un dispositif de stabilisation de la longueur d'onde de Bragg d'un réseau de Bragg vis à vis de variations de température, du type à deux matériaux ayant des coefficients de dilatation thermique éloignés l'un de l'autre, et adapté pour produire, lors d'une augmentation de température, un relâchement d'une prétension initiale du réseau, ce procédé comportant les étapes consistant à :

-    fournir un verre et un métal aptes à se fixer l'un à l'autre par réaction chimique entre eux dans une plage de température appropriée ;
-    mettre en contact ce verre et ce métal à une température comprise dans cette plage de température appropriée.

L'invention concerne également un composant optique comprenant un réseau de Bragg et un dispositif de stabilisation de la longueur d'onde de Bragg de ce réseau vis à vis de variations de température, réalisé selon un tel procédé.

D'autres caractéristiques, buts et avantages de l'invention apparaitront à la lecture de la description détaillée qui va suivre, et en regard des dessins annexés donné à titre d'exemple non limitatif et sur lesquels :

-    la figure 1 est une vue en perspective d'un dispositif conforme à une première variante de l'invention;
-    la figure 2 représente des tracés d'évolution en fonction de la température, de la longueur d'onde de Bragg d'un réseau libre et de réseaux fixés sur un dispositif conforme à l'invention ;
-    la figure 3 représente des tracés d'évolution en fonction de la température, de la longueur d'onde de Bragg de deux réseaux fixés sur un dispositif conforme à la présente invention,
-    la figure 4 est une vue en perspective d'un dispositif conforme à une deuxième variante de l'invention ;
-    la figure 5 est une vue en perspective d'un dispositif conforme à une troisième variante de l'invention ;
-    la figure 6 est une vue en perspective d'un dispositif conforme à une quatrième variante de l'invention, dans un état dissocié :
-    la figure 7 est une vue en perspective du même dispositif qu'à la figure 6, dans un état assemblé ;

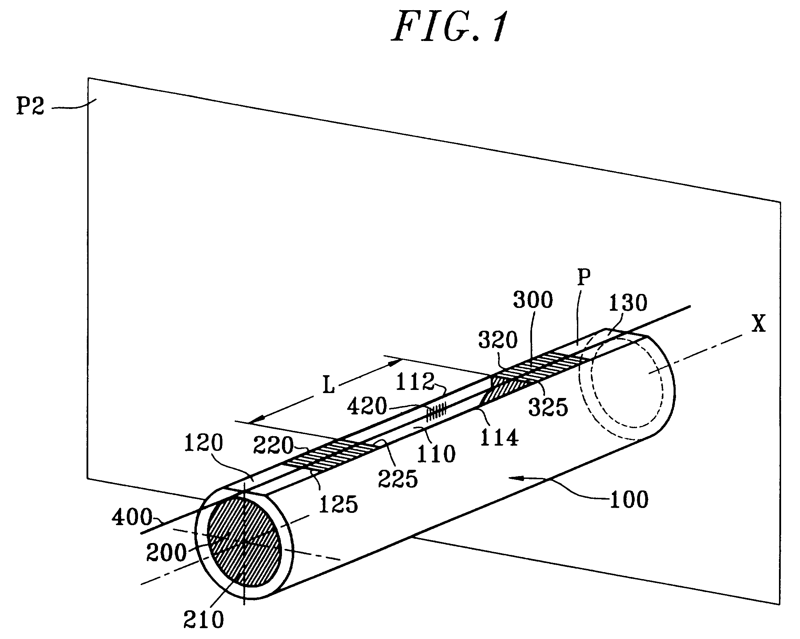

On a représenté su; la figure 1 un premier dispositif conforme à la présente invention. Ce dispositif présente la forme générale d'un cylindre de révolution ayant un axe principal de révolution référencé X sur la figure 1.

Ce dispositif présente quatre parties principales, qui sont un support métallique sensiblement tubulaire 100, deux plots en verre 200 et 300 disposés au niveau d'extrémités de ce support 100, et une fibre optique 400 fixée sur chacun de ces plots 200 et 300. Sur la fibre optique 400 est photoinscrit un réseau de Bragg 420.

Le support 100 présente la forme générale d'un tube. Dans l'exemple de réalisation de la figure 1, ce tube présente un rayon extérieur sensiblement égal au quart de la longueur du tube, et un rayon intérieur sensiblement égal au 4/5 du rayon extérieur du tube.

Bien entendu, tout type de dimensions peuvent être adoptées pour la forme tubulaire du support 100. On peut réaliser par exemple un support de longueur égale à environ 50 mm, et de couple rayon intérieur/rayon extérieur ayant pour valeur 6 mm/8mm, 8mm/10mm, ou encore 6mm/10mm.

Le support tubulaire 100 présente une fenêtre supérieure 110 constituant une ouverture entre l'extérieur et l'intérieur du tube. La fenêtre 110 est ici de forme rectangulaire et s'étend longitudinalement au tube sur environ deux tiers de la longueur du tube 100. La fenêtre 110 présente une largeur constante qui est sensiblement égale au rayon extérieur du tube 100.

La fenêtre 110 comporte deux bords longitudinaux rectilignes 112 et 114, parallèles à l'axe X. Ces deux bords définissent un plan P qui est parallèle à la direction de l'axe X. L'ouverture 110 est prolongée longitudinalement, au delà de chacune de ses extrémités, par une surface plane 120, 130, à chaque fois coplanaire au plan P. Chacune de ces deux surfaces planes s'étend depuis l'ouverture 110 jusqu'à une extrémité du tube 100.

Ainsi, le support 100 présente la forme générale d'un tube ayant été découpé longitudinalement sur toute sa longueur, selon une surface de coupe plane P parallèle à l'axe X, cette surface P étant à une distance de l'axe X qui est supérieure au rayon intérieur du tube, et ce tube présentant en outre une ouverture longitudinale traversant cette surface de coupe P, l'ouverture ayant même largeur que la surface de coupe P.

Le dispositif de la figure 1 présente également deux plots 200 et 300 en verre, en place dans le tube 100 au niveau des extrémités de celui-ci. Le dispositif présente une symétrie par rapport à un plan P2 le coupant à mi-longueur et perpendiculaire à la direction X. Ainsi, on décrira ci-après uniquement une première moitié du dispositif, comprenant le plot 200, une seconde moitié étant symétrique de la première.

Le plot 200 s'étend depuis une première extrémité du tube 100, sur un premier tiers de la longueur du tube, Le pot 200 présente ainsi une surface plane d'extrémité 210, perpendiculaire à la direction X, qui est confondue avec un plan contenant un bord sensiblement circulaire défini par une première extrémité du tube 100.

Le premier tiers du support 100 qui est occupé par le pot 200 se compose de deux parties, que l'on nommera respectivement par la suite premier passage cylindrique et portion tubulaire ouverte en partie supérieure.

Le premier passage cylindrique s'étend selon la direction X depuis la première extrémité du tube 100 et jusqu'à l'extrémité de la fenêtre 110 qui est adjacente à cette première extrémité du tube.

Ce passage est constitué d'une paroi cylindrique de contour transversal fermé, L'intérieur du premier passage est parfaitement cylindrique de révolution, tandis que le contour extérieur du premier passage présente, comme décrit précédemment, une découpe supérieure selon le plan P.

Ce passage est prolongé en direction du centre du support 100 par la portion tubulaire ouverte en partie supérieure. Cette portion tubulaire ne diffère du premier passage cylindrique qu'en ce que la découpe supérieure est remplacé par une partie de la fenêtre 110.

Ainsi, cette portion tubulaire présente, transversalement à la direction X, une section circulaire dont il manque une portion d'arc de cercll en partie supérieure.

On peut distinguer, sur cette section transversale, un contour intérieur et un contour extérieur.

Le contour extérieur est simplement une ligne circulaire de diamètre égal au diamètre extérieur du tube, interrompue en partie supérieure.

Le contour intérieur est formé principalement d'une ligne circulaire concentrique avec le contour extérieur, interrompue en partie supérieure, et de deux segments verticaux rejoignant chacune des deux extrémités de cette ligne circulaire intérieure avec les extrémités de la ligne circulaire du contour extérieur.

Le plot 200 est disposé de manière complémentaire dans le premier tiers extrémal du tube. Ainsi, il présente deux parties sensiblement cylindriques d'axe X formant une seule pièce. Une première partie, parfaitement cylindrique de révolution, remplit de manière complémentaire le premier passage cylindrique. Une deuxième partie remplit de manière complémentaire la portion tubulaire ouverte, Plus précisément, cette deuxième partie s'étend selon l'axe X, depuis la première partie et jusqu'au premier tiers du tube où elle forme un plan d'extrémité intérieur au dispositif sensiblement transversal à l'axe X. La deuxième partie du plot remplit non seulement l'espace cylindrique de révolution délimité par le support 100, mais également l'ouverture 110 traversant la paroi du tube 100, jusqu'à former une face supérieure coplanaire au plan P précédemment décrit. Le pot 200 remplit donc la fenêtre 110 dans sa partie appartenant au premier tiers du tube 100, et sur toute l'épaisseur de la fenêtre 110.

Cette deuxième partie du plot forme donc un cylindre de rayon égal au rayon intérieur du tube 100 et portant, en partie supérieure, une excroissance 220 de forme parallélépipédique, cette excroissance 220 étant complémentaire la partie de la fenêtre 110 située dans le premier tiers extremal du tube 100.

La fenêtre 110 présente un bord d'extrémité 125 adjacent à la première extrémité du tube 100, constitué par une surface sensiblement perpendiculaire à la direction X et orientée en vis à vis avec une partie centrale du dispositif. Le pot 200 est en contact avec cette surface par l'intermédiaire de son excroissance supérieure 220.

Le plot 200 forme à l'intersection entre la face d'extrémité intérieure au dispositif, perpendiculaire à la direction X et entre la surface plane supérieure de l'excroissance 220, une arête 225 perpendiculaire à la direction X.

Les deux plots 200 et 300 délimitent, entre leurs surfaces d'extrémité intérieure au dispositif, une cavité centrale du dispositif qui reste vide. On définit un écartement L comme la distance séparant les surfaces d'extrémité intérieure au dispositif de chacun des deux plots 200 et 300.

Ainsi, le support 100 forme, dans sa partie centrale sur laquelle s'étend l'ouverture 110, une gorge qui contient à chacune de ses deux extrémités une partie d'un pot de verre, sur laquelle est fixée une extrémité de la fibre 400.

Sur les surfaces planes supérieures des plots 200 et 300 sont fixées respectivement deux extrémités de la fibre optique 400. Plus précisément, les extrémités de la fibre 400 sont fixées sur cette surface au voisinage de l'arête 225 du plot 200 et de l'arête correspondante du plot 300. La fibre optique 400 est fixée avec une prétension longitudinale choisie.

Chacun des plots 200 et 300 est fixé au tube 100 sur toute sa surface en contact avec ce tube.

Le dispositif de la figure 1 fonctionne de la façon suivante. Le verre constituant les plots 200 et 300 ayant un coefficient de dilatation thermique positif élevé par rapport au coefficient positif du métal constituant le support 100, une élévation de température provoque une croissance en volume des plots 200 et 300 relativement au support 100.

Lors de cette déformation, chacun des deux plots de verre a tendance à s'étendre au niveau de ses extrémités, son extrémité en vis-à-vis avec le centre du dispositif s'étendant vers le centre du dispositif, et son extrémité située à l'extrémité du tube 100 s'étendant vers l'extérieur du dispositif.

Ainsi, les zones du plot qui sont proches de l'intérieur du dispositif ont tendance à se rapprocher de la partie centrale du dispositif. En particulier, l'arête 225 du plot 200 et l'aréte correspondante du plot 300 se rapprochent du centre du dispositif.

Ce déplacement de l'arête 225 du pot 200, en direction du centre du dispositif, est encore accentué par le fait que l'excroissance 220 est en contact contre le bord d'extrémité 125 de la fenêtre 110.

Ainsi, sous l'effet d'une augmentation de température, l'excroissance 220 se dilate, notamment dans la direction X, et, prenant appui sur l'extrémité 125 de la fenêtre 110, repousse en éloignement de l'extrémité 125 toute partie de la surface supérieure du pot 200 qui est exposée à travers la fenêtre 110.

Le fait que le plot 200 soit en appui sur un bord transversal 125 confère une grande efficacité au dispositif. Toutefois d'autres dispositifs sans bord transversal d'appui du pot 200 permettent également, par expansion à la chaleur du plot de verre, de générer un déplacement d'une surface supérieure et centrale du pot de verre vers le centre du dispositif.

Ainsi, les points de fixation de la fibre optique 400 se rapprochent l'un de l'autre lorsque la température augmente, et la fibre se détend, ce qui permet de maintenir la longueur d'onde de Bragg sensiblement constante, la détente du réseau ayant un effet sur les variations de la longueur d'onde qui est inverse de l'effet d'une augmentation de température.

Bien entendu, lors d'un refroidissement du dispositif, la fibre 400 se retend et la longueur d'onde est là encore maintenue constante.

Les inventeurs ont découvert qu'il est possible de réaliser des dispositifs conformes à celui qui vient d'être décrit et plus généralement des dispositifs à dilatation différentielle en utilisant une propriété qu'ont certains verres de pouvoir réagir chimiquement avec certains métaux, à haute température, de sorte qu'il se produit un accrochage entre les deux matériaux au niveau d'une interface commune.

Cet accrochage dépend des propriétés des matériaux mis en contact et du type de réaction chimique ayant lieu entre ces deux matériaux.

Dans le cas du dispositif de la figure 1, le métal constituant le support 100 et le verre constituant les plots 200 et 300 sont également choisis de façon à ce que le coefficient de dilatation thermique du verre soit nettement plus élevé que le coefficient de dilatation thermique du métal.

Le métal choisi est par exemple un alliage de type Fer-Nickel. On peut notamment utiliser un tel alliage identifié sous le nom commercial d'Invar. On peut également utiliser de tels alliages identifiés sous les noms commerciaux de Super Invar ou Invar Supérieur.

Un Invar Supérieur présente par exemple une composition chimique conforme à la suivante : 0,003% de Carbone; 0,11% de Silicium; 0,37% de Manganèse; 36,24 % de Nickel ; 63,3% de Fer.

Le métal choisi peut également être un alliage de type Fer-Nickel-Cobalt. On peut notamment utiliser un tel alliage identifié sous le nom commercial de Kovar, encore appelé Dilver.

Les coefficients de dilatation thermique de ces différents alliages se situent entre $0,2.10^{-6}$ $K^{-1}$ et $5.10^{-6}$ $K^{-1}$.

Le métal peut également être du fer, le fer ayant un coefficient de dilatation thermique de $12.10^{-6}$ $K^{-1}$. On peut également prévoir un acier inox.

Le verre, ou matériau vitreux, constituant les plots 200 et 300, est ici un verre à coefficient de dilatation thermique élevé. On prévoit d'utiliser par exemple un verre de fluorures ou de fluorophosphates. Ces verres possèdent généralement des coefficients de dilatation thermique compris entre environ $15.10^{-6}$ $K^{-1}$ et $22.10^{-6}$ $K^{-1}$.

Le tube support 100 étant préchauffé à une température de réaction entre le verre et le métal choisi, on coule sur le support le verre prèalablement fondu et élevé à au moins cette température de réaction, Les verres utilisés ont en général une température de fusion d'environ 800 à 900°C.

Le verre est ainsi coulé à une température typiquement située aux alentours d'une gamme allant de 550°C à 650°C.

Avant de couler le verre, on dispose en partie centrale du tube, une pièce d'encombrement ayant la géométrie de la cavité centrale que l'on souhaite obtenir entre les deux plots de verre au final.

Le verre vient, par coulée, épouser la forme intérieure du tube 100 et remplir exactement les cavités situées à chacune des extrémités du tube, délimitées par la surface interne du tube et par la pièce d'encombrement.

Une fois le verre durci, la pièce d'encombrement est extraite de la partie centrale. Il reste dans le tube une cavité correspondant à la géométrie de la pièce d'encombrement.

Après refroidissement, le dispositif dans son ensemble est ensuite recuit à une température d'environ 280°C à 300°C.

Ce recuit a pour rôle de permettre un relàchement de contraintes thermiques dans le verre qui vient d'être coulé. De telles contraintes thermiques résultent du passage du verre d'un état liquide à un état figé. Ce recuit n'est pas absolument nécessaire. Il permet d'éviter d'éventuelles fractures ou d'éventuels éclats susceptibles de perturber la bonne qualité de l'accrochage du verre sur le métal.

Les inventeurs ont mis en évidence le fait que lorsque les différentes opérations précédemment décrites sont réalisées dans les conditions thermiques appropriées au couple verre/métal choisi, le verre accroche au métal et lui demeure rigidement solidaire de sorte qu'il n'est plus nécessaire d'avoir recours à une colle pour maintenir ces deux matériaux fixés l'un à l'autre comme c'était le cas jusqu'à présent.

Le verre et le métal réagissent entre eux dans une zone de température qui typiquement s'étend au delà de 350°C à 450°C.

On réalise ensuite par polissage des méplats au niveau de surfaces des plots de verre dépassant à travers la fenêtre 110, de façon à ce que les plots de verre 200 et 300 présentent à travers la fenêtre 110 une surface supérieure coplanaire aux surfaces 120 et 130. On fixe ensuite sur ces méplats les deux extrémités de la fibre 400 sur laquelle est photoinscrit le réseau de Bragg 420.

Les extrémités de la fibre 400 peuvent être collées sur les plots de verre par exemple à l'aide d'une code cyanoacrylate, d'une code époxyde, d'une résine polymérisable par exposition à des ultra-violets, ou à l'aide d'autres colles ou procédés de collage.

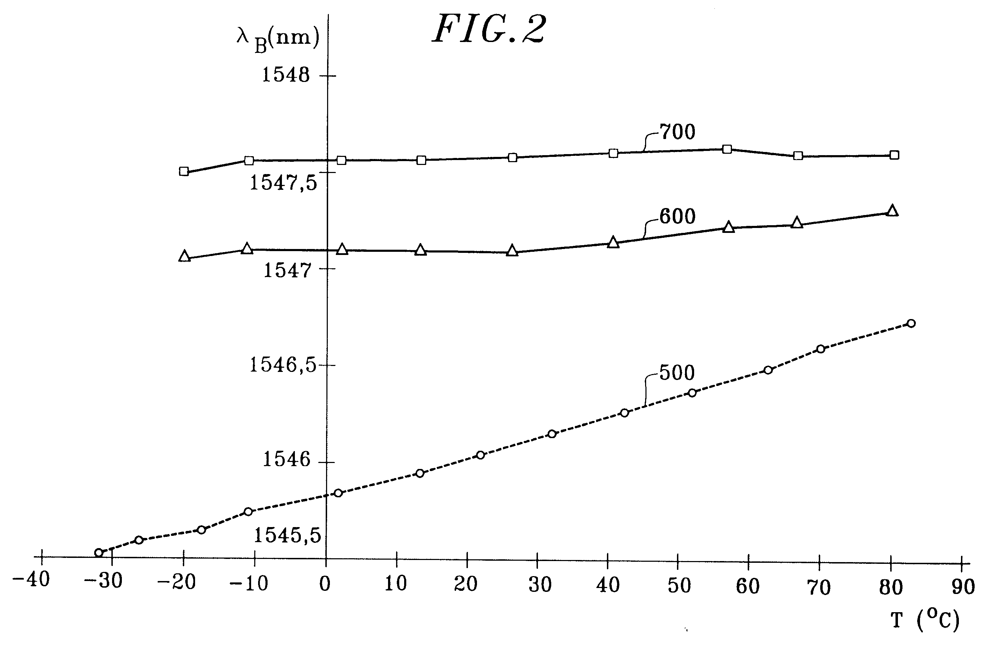

On a représenté sur la figure 2 des courbes d'évolution de la longueur d'onde de Bragg en fonction de la température, pour 3 réseaux de Bragg photoinscrits de longueur d'onde à l'état libre, c'est à dire à l'état non prétendu, et à température ambiante, égale à 1546nm.

La figure 2 comporte un tracé 500 correspondant à un réseau libre, fixé sur aucun support et soumis à aucune contrainte, un tracé 600 et un tracé 700 correspondant tous deux à un réseau de Bragg photoinscrit dans une fibre fixée par collage sur un dispositif conforme à celui de la figure 1.

Les plots 200 et 300 sont dans ce cas des plots en verre de fluorures, de type fluorozirconate, dont l'élément majeur à un peu plus de 50% est le fluorure de Zirconium, de formule $ZrF_4$. Le coefficient de dilatation thermique de ce verre est égal à $18,5.10^{-6}$ $K^{-1}$.

Le tube 100 est en Invar supérieur de coefficient de dilatation thermique égal à $1,1.10^{-6}$ $K^{-1}$.

La cavité centrale est de longueur L égale à 20 mm, et les points de fixation de la fibre sont espacés également d'environ 20 mm.

Dans le cas du tracé 600, la fibre 400 est fixée sur les plots de verre avec une prétension du réseau qui est telle que sa longueur d'onde se déplace à 1547,1 nm à température ambiante, ce qui correspond à une élongation de la fibre de l'ordre de 0,07%.

Le tracé 700 correspond à un réseau de Bragg fixé avec une prétension telle que sa longueur d'onde à température ambiante se déplace à 1547,55 nm, ce qui équivaut à une élongation de la fibre de l'ordre de 0,1%

Ces trois réseaux sont introduits dans une étuve couvrant une plage de température allant de -30°C à +80°C.

Comme on peut le constater sur la figure 2, la variation de longueur d'onde de Bragg est de 1,1nm sur une plage de 100°C pour le réseau libre, ce qui est conforme à la théorie.

Pour le réseau correspondant à la courbe 600, la variation de longueur d'onde de Bragg est de 0,25 nm pour une variation de température de 100°C. La sensibilité de la longueur d'onde de Bragg vis à vis de la température est donc, dans ce cas, réduite d'un facteur 4 gràce au dispositif selon l'invention.

Pour le réseau correspondant à la courbe 700, la variation de longueur d'onde de Bragg est de 0,1 nm pour une variation de température de 100°C. La sensibilité de la longueur d'onde de Bragg vis à vis de la température est donc, dans ces conditions expérimentales, réduite d'un facteur 10, c'est à dire d'un ordre de grandeur, gràce au dispositif selon l'invention,

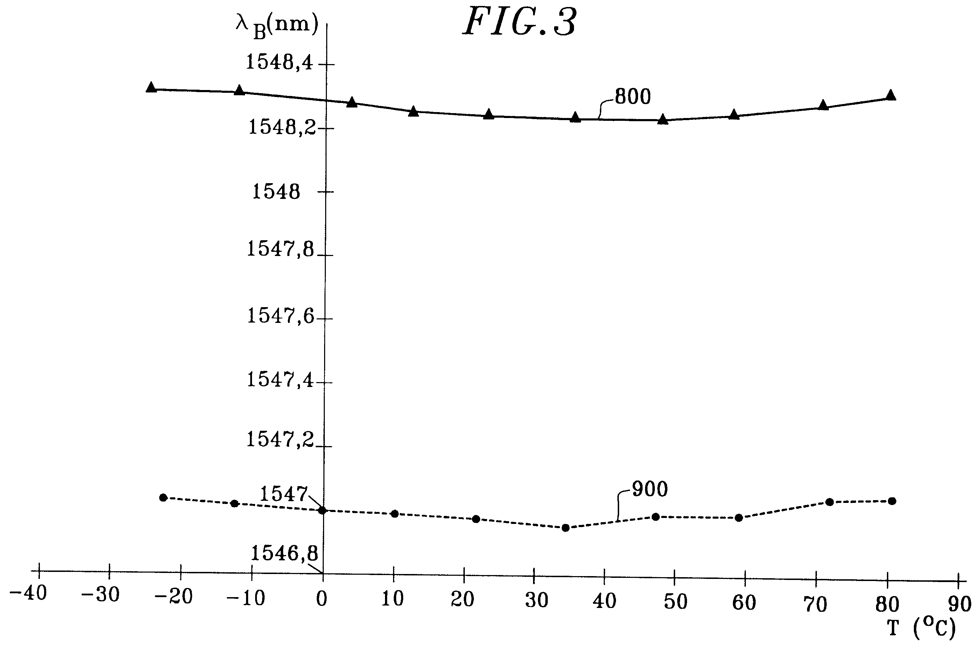

On a représenté sur la figure 3 des tracés d'évolution de la longueur d'onde de Bragg pour deux réseaux photoinscrits, fixés sur des dispositifs conformes à celui de la figure 1. Dans ces dispositifs, le matériau constitutif du support tubulaire est de l'Invar, Le verre constituant les plots est un verre de fluorophosphates, constitué dans cet exemple à 90-95% de fluorures métalliques et à 5-10% de $P_2O_5$. Ce verre a un coefficient de dilatation égal à $15,1.10^{-6}$ $K^{-1}$.

Les deux réseaux photoinscrits ont des longueurs d'onde de Bragg à l'état libre et à température ambiante respectivement égales à 1545,5 nm et 1546,75 nm.

Ces deux réseaux sont fixés sur le dispositif avec une prétension telle que la longueur d'onde de Bragg de chacun d'entre eux se déplace de 1,5 nm, soit une élongation de l'ordre de 0,1%.

Avant d'être soumis à des variations de température, les deux réseaux ainsi fixés ont donc pour longueurs d'onde de Bragg 1547,00 et 1548,25 nm respectivement.

Alors que les réseaux étaient fixés sur les plots de verre par des plots de colle espacés de 20 mm dans le cas des réseaux correspondant à la figure 2, les réseaux sont ici fixés sur les plots de verre avec un espacement entre les points de colle égal à 16 mm et 17 mm.

Ainsi, sur la figure 3, le tracé 800 correspond à un espacement entre les ponts de colle égal à 16 mm, et le tracé 900 correspond à un espacement entre les points de colle égal à 17 mm.

Ces deux dispositifs ont été également soumis à un cycle thermique allant de -30°C à 80°C.

Il apparait sur la figure 3 que la sensibilité de la longueur d'onde de Bragg vis-à-vis de la température, pour les deux réseaux, a été réduite d'au moins un facteur 10, et même davantage avec le dispositif présentant des plots de verre espacés 16 mm.

Ces deux dispositifs permettent ainsi de réduire les variations de longueur d'onde de Bragg des réseaux à 0,09 nm pour une variation de température de 100°C.

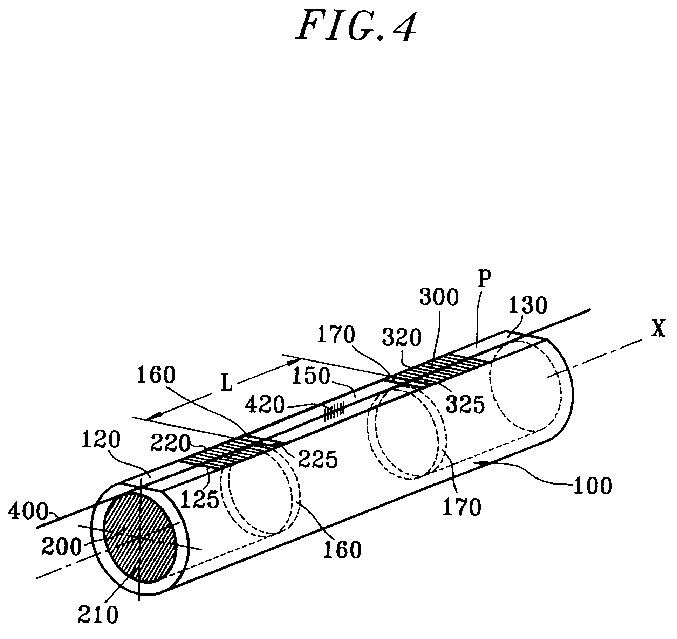

On a représenté sur la figure 4 un dispositif conforme à une deuxième variante de l'invention. Le dispositif de la figure 4 ne diffère de celui de la figure 1 que par le fait que la cavité centrale ménagée dans le dispositif de la figure 1 est ici partiellement occupée par un plot 150 en matériau métallique qui forme une seule pièce avec le support 100.

Les mêmes références numériques seront reprises pour des éléments du dispositif de la figure 4 qui sont similaires à des éléments du dispositif de la figure 1.

Plus précisément, l'espace défini par l'ensemble de la cavité centrale du dispositif de la figure 1 est ici est occupé par un pot métallique 150, à l'exception de deux espaces aplatis 160 et 170 s'étendant transversalement à la direction X, et prolongeant par leur épaisseur, en direction du centre du dispositif, les surfaces transversales des extrémités intérieures au dispositif des plots en verre 200 et 300.

Plus précisément, le plot central métallique 150 n'est en contact avec aucun des plots 200 et 300, les parties des plots 200 et 300 qui sont adjacentes à la partie centrale du dispositif étant séparées du plot central 150 par les espaces 160 et 170.

Ainsi, pour chacun des plots 200 et 300, les surfaces du plot qui sont adjacentes à la partie centrale 150 du dispositif et qui s'étendent transversalement à l'axe X sont libres de se déformer en rapprochement de la partie centrale du dispositif. Les excroissances supérieures référencées 220, 320, de chacun des plots 200 et 300 peuvent notamment s'étendre longitudinalement au dispositif, permettant ainsi un relâchement de la prétension du réseau de Bragg 420.

Par ailleurs, le plot central métallique 150 présente une surface supérieure plane 155 coplanaire au plan P précédemment défini. Ainsi, la fibre 400 dans laquelle le réseau 420 est photoinscrit, et en particulier une zone de fibre dénudée où est localisé le réseau 420, repose sur cette surface supérieure plane métallique 155. Le réseau est alors recouvert d'une résine protectrice, après montage.

Le dispositif de la figure 4 est réalisé par le même procédé que le dispositif de la figure 1, les espaces 160 et 170 étant réservés au coulage du verre par l'intermédiaire de deux pièces d'occultation de géométrie appropriée.

Ainsi, le support métallique de la figure 4 forme deux cavités de part et d'autre du plot central métallique 150, dans chacune desquelles est coulé un pot de verre.

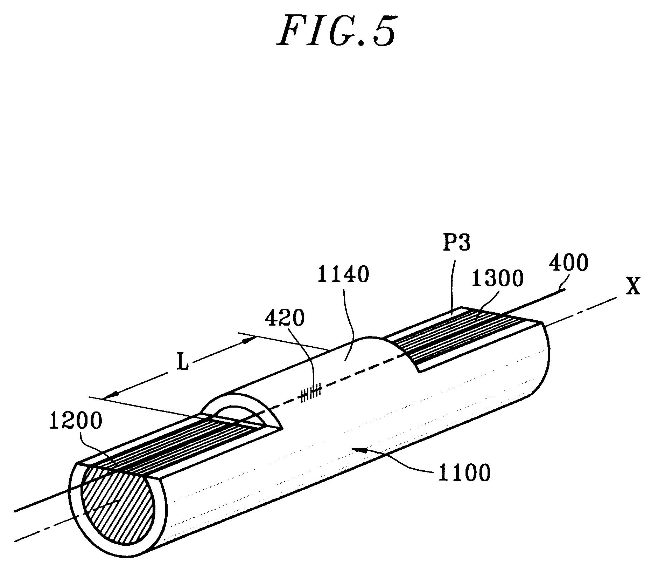

On a représenté sur la figure 5 un dispositif selon une troisième variante de l'invention. Dans cette variante, un support métallique 1100 est un tube dont ont été enlevées deux parties, chacune délimitée latéralement par deux génératrices du tube 1100 et s'étendant chacune sur un tiers de la longueur du tube 1100, depuis une extrémité du tube.

Plus précisément, le tube 1100 a été dècoupé selon un plan P3 parallèle à un axe X de révolution principal du tube 1100, mais non confondu avec cet axe X, ce découpage ayant eu lieu depuis chacune des extrémités du tube 1100 et à chaque fois sur un tiers adjacent à l'extrémité considérée,

Le support 1100 est donc constitué de trois parties, une partie centrale 1140 formant une paroi tubulaire complète, et deux parties d'extrémité présentant chacune une fenêtre supérieure.

Chacune des parties d'extrémité forme donc une cavité, qui est remplie de verre conformément au procédé précédemment décrit. Plus précisément, chacune des parties d'extrémité contient un plot de verre 1200, 1300, qui s'étend entre deux plans transversaux à la direction X, un premier plan étant défini par l'extrémité du tube 1100, un deuxième plan étant défini par la limite entre la partie centrale et la partie d'extrémité considérée, c'est à dire à l'extrémité de la fenêtre supérieure considérée qui est la plus proche du centre du dispositif.

Par ailleurs, les plots de verre 1200 et 1300 forment en partie supérieure une surface plane confondue avec le plan P3 de découpe du tube 1100.

Ainsi, la partie tubulaire complète et centrale ne contient aucune partie en verre. Une fibre optique 400 portant un réseau de Bragg 420 est fixée comme précédemment décrit sur les surfaces supérieures des plots de verre, et est tendue à l'intérieur de la partie tubulaire centrale 1140.

Gràce à ce dispositif, le réseau de Bragg photoinscrit dans la fibre est protégé de toute agression mécanique ou chimique, la fibre 400 n'exposant une zone dénudée qu'en dessous de l'enveloppe métallique formée par la paroi tubulaire centrale 1140.

De manière plus générale, les inventeurs ont découvert qu'un support métallique comportant une gorge ou des cavités ouvertes en partie supérieure est particulièrement adapté pour permettre un coulage aisé des plots de verre dans le support, et confère au dispositif ainsi réalisé de très bonnes performances en termes de stabilisation thermique.

Ainsi, le fait que les plots de verre soient fixés dans des cavités ou une gorge, cette gorge ou ces cavités présentant un surface intérieure à contour en U transversalement à la direction de la fibre, et le fait que le pot de verre soit fixé sur une surface de fond et sur des surfaces formant bordures latérales intérieures de ce U permet d'obtenir un dispositif de stabilisation particulièrement performant.

En effet de telles géométries permettent notamment d'obtenir des déplacements d'un point de collage de la fibre, situé sur la surface exposée du plot de verre, qui sont particulièrement adaptés aux ordres de grandeur des déplacements souhaités pour les extrémités de la fibre.

En outre, le fait que le pot de verre soit fixé dans la cavité ou la gorge par une surface de fond et par des surfaces de la gorge ou de la cavité qui sont disposées latéralement par rapport à une direction principale de la fibre optique, assure une grande robustesse au dispositif, et accentue encore la longévité de la fixation entre le verre et le métal.

Les inventeurs ont également constaté que le fait que les plots de verre soient fixés sur une surface interne de forme cylindrique de révolution du support confère une longévité supplémentaire à la fixation entre le verre et le métal. Plus généralement, le fait que le support métallique ait une forme tubulaire et le fait que les plots aient une forme cylindrique de révolution, complémentaire d'un espace interne du support, confère au dispositif des performances particulièrement élevées en termes de stabilisation thermique et une fiabilité particulièrement forte vis à vis de ces performances.

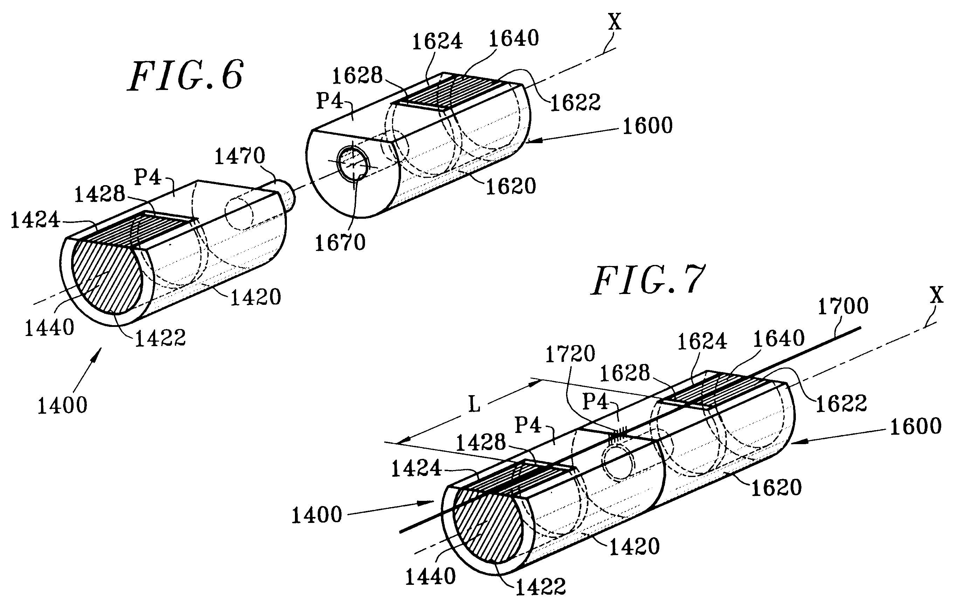

On a représenté sur les figures 6 et 7 un dispositif conforme à une quatrième variante de l'invention.

Ce dispositif comporte deux éléments démontables 1400 et 1600, chacun d'eux comprenant un support métallique 1420, 1620, et un plot en verre 1440, 1640.

Chacun des supports métalliques 1420 et 1620 présente la forme générale d'un cylindre parcouru depuis une de ses extrémités et sur une demi-longueur du cylindre par une cavité intérieure cylindrique 1422, 1622 coaxiale avec lui.

Ainsi, au sein de chacun des deux supports métalliques 1420 et 1620, on peut distinguer, en parcourant le support le long d'un axe principal X de ce support, une partie pleine et une partie creuse.

Par ailleurs, chacun des supports métalliques 1420 et 1620 présente la forme générale d'un cylindre qui est découpé selon un plan P4 parallèle à un axe principal X de ce cylindre, ce plan P4 n'étant pas confondu avec cet axe X.

Ce plan P4 est suffisamment proche de l'axe X pour que la partie creuse du support métallique considéré, consistant en une paroi cylindrique, soit interrompue sur une portion de sa circonférence.

Ainsi, les parties creuses présentent chacune une fenêtre supérieure 1424, 1624 qui s'étend longitudinalement depuis une extrémité du support métallique 1420, 1620 et jusqu'à une limite entre la partie creuse et la partie pleine du support métallique 1420, 1620 considéré.

Les parties creuses des deux éléments 1400, 1600 forment donc chacune une cavité présentant une ouverture en partie supérieure qui s'étend selon l'axe X.

A l'intérieur de chacune des cavités cylindriques 1422, 1622 est placé un plot de verre 1440, 1640. Chacun des deux plots de verre 1440, 1640 est mis en place par coulage dans la cavité cylindrique 1422, 1622 qui lui correspond, selon le procédé précédemment décrit, en réservant à l'aide d'une pièce d'encombrement appropriée un espace aplati 1428, 1628, transversal à la direction principale X du support considéré, entre le plot de verre 1440, 1640 et la partie pleine du support métallique 1420, 1620 correspondant.

Chacun des deux espaces aplatis 1428 et 1628 est, comme dans le cas des dispositifs précédemment décrits, destiné à permettre des déformations d'une portion du pot 1440, 1640, qui est adjacente à un réseau de Bragg, en direction d'une zone intérieure du dispositif d'ensemble.

Par ailleurs, chacun des plots en verre 1440 et 1640 affleure au niveau de la fenêtre supérieure 1424, 1624 de la partie creuse dans laquelle il est placé, c'est à dire qu'il forme un plan supérieur confondu avec un plan P4 contenant des bords longitudinaux de cette fenêtre supérieure 1424, 1624.

Les éléments démontables 1400 et 1600 présentent, coté plein, une surface d'extrémité, transversale à la direction X, qui est munie en son centre d'un élément d'emboîtement respectivement mâle 1470 ou femelle 1670, ces deux éléments d'emboîtement étant complémentaires l'un à l'autre.

Dans l'exemple de réalisation des figures 6 et 7, l'élément mâle 1470 est une embase cylindrique filetée, et l'élément femelle 1670 est une cavité cylindrique munie d'un filetage intérieur. Ainsi les éléments démontables 1400 et 1600 sont adaptés pour être assemblés l'un sur l'autre par vissage autour de l'axe principal X.

On a représenté sur la figure 7 le dispositif où les éléments démontables 1400 et 1600 sont vissés l'un sur l'autre, les plans supérieurs des plots de verre 1440, 1640 de chacun d'eux étant dans cette disposition coplanaires l'un avec l'autre.

Une fois les éléments 1400 et 1600 ainsi assemblés, une fibre optique 1700 sur laquelle est photoinscrit un réseau de Bragg 1720 est fixée par ses extrémités sur chacun des plots de verre 1440 et 1640, et plus précisément sur la face supérieure de chacun des plots de verre, à chaque fois en un point adjacent à l'espace 1428, 1628 compris entre le plot de verre 1440, 1640 et la partie pleine de l'élément démontable considéré.

Comme dans le cas des dispositifs précédents, la fibre 1700 est fixée avec une prétension choisie.

Le dispositif des figures 6 et 7 est particulièrement adapté pour être fabriqué en grandes quantités. En effet, le fait de couler séparément les deux plots de verre 1440 et 1640, dans deux supports séparés, présente de nombreux avantages.

Ainsi, chacun des deux supports métalliques peut être orienté de façon appropriée pendant le coulage, et en particulier en inclinant l'axe X du support métallique par rapport à l'horizontale, alors que dans le cas des dispositifs à support métallique en une seule pièce, le support devait être placé pendant le coulage de façon à permettre un coulage des deux plots de verre, ce qui limite les possibilités d'orientation du support pendant le coulage.

Un tel dispositif à support métallique en deux parties présente également l'avantage de permettre un contrôle précis d'un écartement entre les plots de verre.

En effet, un tel dispositif permet de couler d'abord les plots de verre, puis, dans un deuxième temps, d'usiner des surfaces des supports métalliques destinées à venir en contact l'une contre l'autre lorsque les supports sont assemblés, de façon à régler l'écartement entre les plots de verre de façon optimale. Un tel réglage par usinage de pièces métalliques est plus aisé qu'un réglage réalisé uniquement en délimitant les plots de verre au coulage par une ajustage très précis de la géométrie des pièces d'encombrement utilisées.

Bien entendu, la présente invention ne se limite pas aux structures des dispositifs qui viennent d'être décrits, ni aux matériaux particuliers donnés ici à titre d'exemples.

[1] G. Meltz, W.W. Morey, W.H. Glenn, 《 Formation of Bragg gratings in optical fibres by a transverse holographic method 》, Optical Letters, 14, pp. 823-825, 1989 ;

[2] T. Iwashima, A. Inoue, M. Shigematsu, M. Nishimura, Y. Hattori, 《 Temperature compensation technique for fibre Bragg gratings using liquid crystalline polymer tubes 》, Electronic Letters, Vol. 33, N°5, pp. 417-419, 27 février 1997 :

[3] D.L. Weidman, G.H. Beall, K.C. Chyung, G.L. Francis, R.A. Modavis, R.M. Morena, 《 A novel negative expansion substrate material for athermalizing fiber Bragg gratings 》, 22nd European conference on Optical Communication, Oslo, 1996, Paper MoB. 3.5, pp. 1-61/1-64;

[4] G.W. Yoffe, P.A. Krug, F. Ouellette, D.A. Thorncraft, 《 Passive temperature-compensating package for optical fibre gratings 》, Applied Optics, vol. 34, n° 30, pp.6859-6861, 20 octobre 1995 ;

[5] W.M. Morey, W.L. Glomb, 《 Incorporated Bragg filter temperature compensated optical waveguide device 》, Brevet US N° 5.042.898, 27 Août 1991 :

[6] J. Rioublanc, J.M. Blondy, P. Facq, 《 Optimisation d'un système de stabilisation passive de la dérive en température de la longueur d'onde d'accord des réseaux de Bragg 》, JNOG96, pp. 261-263 ;

[7] Thèse n° 14-1997 soutenue par J. Rioublanc le 6 juin 1997, à l'Université de Limoges, intitulée : 《 Etude d'un système de stabilisation passive de la dérive en température de la longueur d'onde d'accord des réseaux de Bragg 》

## Revendications

1. Procédé de réalisation d'un dispositif de stabilisation de la longueur d'onde de Bragg d'un réseau de Bragg (420) vis à vis de variations de température du type à dilatations différentielles entre un verre et un métal de façon à produire, lors d'une augmentation de température, un relâchement d'une prétension initiale du réseau (420), ce procédé étant caractérisé en ce que :

    a) le verre (200, 300, 1200, 1300, 1440, 1640) et le métal (100, 1100, 1420, 1620) sont choisis aptes à se fixer l'un à l'autre par réaction chimique entre eux dans une plage de température appropriée ;
    b) on met en contact ce verre (200, 300, 1200, 1300, 1440, 1640) et ce métal (100, 1100, 1420, 1620) à une température comprise dans cette plage de température appropriée.

2. Procédé selon la revendication 1, caractérisé en ce qu'il comporte une étape consistant à couler le verre (200,300,1200,1300,1440,1640) sur un support en ledit métal (100,1100,1420,1620).

3. Procédé selon la revendication précédente, caractérisé en ce que le verre (200,300,1200,1300,1440,1640) est coulé à une température choisie de la plage de température appropriée, et en ce qu'avant de couler le verre (200,300,1200,1300,1440,1640), le support métallique (100,1100,1420,1620) est préchauffé à une température sensiblement égale à la température choisie.

4. Procédé selon l'une des revendications précédentes, caractérisé en ce qu'il comporte les étapes consistant à :

    - disposer le verre (200,300,1200,1300,1440,1640) sur un support en ledit métal (100,1100,1420,1620) ;
    - chauffer l'ensemble formé du verre (200,300,1200,1300,1440,1640) et du support en métal (100,1100,1420,1620), à une température choisie pour que le verre (200,300,1200,1300,1440,1640) et le métal (100,1100,1420,1620) réagissent chimiquement et s'accrochent entre eux.

5. Procédé selon la revendication précédente, caractérisé en ce que l'ensemble formé du verre (200,300,1200,1300,1440,1640) et du support en métal (100,1100,1420,1620) est recuit à une température comprise environ entre 280°C et 300°C.

6. Procédé selon l'une quelconque des revendications précédentes, caractérisé en ce que le verre (200,300,1200,1300,1440,1640) est un verre de fluorures.

**7.** Procédé selon l'une quelconque des revendications précédentes, caractérisé en ce que le verre (200,300,1200,1300,1440,1640) est un verre de fluorophosphates.

**8.** Procédé selon l'une quelconque des revendications précédentes, caractérisé en ce que le métal (100,1100,1420,1620) est un alliage Fer-Nickel.

**9.** Procédé selon l'une quelconque des revendications 1 à 7, caractérisé en ce que le métal (100,1100,1420,1620) est un alliage Fer-Nickel-Cobalt.

**10.** Procédé selon l'une quelconque des revendications 1 à 7, caractérisé en ce que le métal (100,1100,1420,1620) est de l'Invar.

**11.** Procédé selon l'une quelconque des revendications 1 à 7, caractérisé en ce que le métal (100,1100,1420,1620) est du Kovar.

**12.** Procédé selon l'une quelconque des revendications 1 à 7, caractérisé en ce que le métal (100,1100,1420,1620) est du fer.

**13.** Procédé selon l'une quelconque des revendications 1 à 7, caractérisé en ce que le métal (100,1100,1420,1620) est de l'acier inox.

**14.** Procédé selon l'une quelconque des revendications précédentes, caractérisé en ce qu'il comporte les étapes consistant à :

- fournir un support métallique (100,1100,1420,1620) ;
- mettre en place le verre (200,300,1200,1300,1440,1640) sur le support métallique (100,1100,1420,1620) de façon à former deux plots de verre (200,300,1200,1300,1440,1640) ayant chacun une surface d'extrémité intérieure au dispositif s'étendant sensiblement transversalement à un axe principal (X) passant par les deux plots, cette surface étant à chaque fois recouverte par un espace libre (160,170,1428,1628)

**15.** Procédé selon la revendication précédente, caractérisé en ce qu'il comporte les étapes consistant à :

- fournir un support métallique (100,1100,1420,1620) formant une gorge (100, 110) ;
- mettre en place les plots de verre (200,300,1200,1300,1440,1640) dans cette gorge (100, 110) de sorte qu'ils soient au moins fixés sur des faces intérieures de la gorge formant bordures latérales de celle-ci ;

**16.** Procédé selon la revendication 14, caractérisé en ce que le support (100,1100,1420,1620) forme deux cavités (1100, 1422, 1622), ces cavités (1100,1422,1622) présentant chacune une face interne ayant une section en U selon un plan de section transversal à un axe (X) passant par ces deux cavités (1100,1422,1622), et en ce que les plots de verre (200,300,1200,1300,1440,1640) sont mis en place dans chacune de ces cavités (1100,1422,1622).

**17.** Procédé selon l'une des revendications 15 ou 16, caractérisé en ce que la gorge (100,110) ou les cavités (1100,1422,1622) délimitent une zone de forme cylindrique de révolution.

**18.** Procédé selon l'une quelconque des revendications précédentes, caractérisé en ce que le support (100,1100,1420,1620) présente une forme extérieure sensiblement cylindrique de révolution.

**19.** Procédé selon l'une quelconque des revendications 15 à 18, caractérisé en ce que la gorge (100, 110) ou les cavités (1100,1422,1622) présentent une ouverture supérieure (110) ayant une extrémité comportant une surface (125) faisant face à une partie centrale du support (100), et en ce que les plots de verre (200,300) sont placés sur le support (100) de maniére à être en contact contre cette surface (125).

**20.** Procédé selon l'une des revendications 16 à 19, caractérisé en ce que le support métallique (100) présente un plot métallique (150) séparant les deux cavités, le plot métallique (150) étant muni d'une surface sensiblement plane, en ce que les plots de verre (200,300) sont mis en place dans las cavités de façon à ce que les pots de verre (200,300) exposent chacun une surface (220,320) coplanaire avec la surface sensiblement plane du plot métallique (150).

**21.** Procédé selon l'une quelconque des revendications 14 à 20, caractérisé en ce que le support métallique (1100) forme une paroi (1140) apte à entourer une fibre optique (400) ayant ses extrémités fixées sur chacun des plots de verre (1200,1300).

**22.** Procédé selon l'une des revendications précédentes, caractérisé en ce qu'il comporte les étapes consistant à :

- fournir un support (1400,1600) en ledit métal, constitué de deux demi-supports (1400,1600) séparés, chacun des deux demi-supports (1400,1600) présentant une cavité (1422,1622) ;
- mettre en place des plots (1440,1640) en ledit verre dans les cavités (1422,1622) des deux demi-supports (1400, 1600) ;

-   assembler les deux demi-supports (1400,1600).

23. Procédé selon la revendication précédente, caractérisé en ce que l'un des deux demi-supports (1400) porte une vis (1470) et l'autre demi-support (1600) porte une cavité filetée (1670) complémentaire de cette vis (1470).

24. Composant optique caractérisé en ce qu'il comprend un réseau de Bragg (420) et un dispositif de stabilisation de la longueur d'onde de Bragg de ce réseau vis à vis de variations de température réalisé selon un procédé conforme à l'une quelconque des revendications précédentes.

*FIG. 1*

*FIG.2*

EP 0 926 517 A1

*FIG.3*

EP 0 926 517 A1

*FIG.4*

*FIG.5*

FIG.6

FIG.7

## RAPPORT DE RECHERCHE EUROPEENNE

Office européen
des brevets

Numéro de la demande

EP 98 40 3155

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 694 503 A (LEMAIRE PAUL JOSEPH ET AL) 2 décembre 1997 <br> * abrégé; figure 1 * <br> * colonne 1, ligne 10 - ligne 29 * <br> * colonne 1, ligne 41 - colonne 2, ligne 10 * | 1,24 | G02B6/16 <br> G02B6/34 <br> C03C27/02 |
| A | | 2-4, 8-12,14 | |
| A | WO 97 26572 A (CORNING INC ;BEALL G H (US); WEIDMAN D L (US)) 24 juillet 1997 <br> * abrégé; figure 1 * <br> * page 4, ligne 20 - page 5, ligne 8 * <br> * page 6, ligne 6 - ligne 13 * | 1,14,24 | |
| A | EP 0 798 573 A (SUMITOMO ELECTRIC INDUSTRIES) 1 octobre 1997 <br> * abrégé; figures 4,6 * <br> * colonne 3, ligne 9 - ligne 36 * | 1,14,24 | |
| A,D | YOFFE G W ET AL: "PASSIVE TEMPERATURE-COMPENSATING PACKAGE FOR OPTICAL FIBER GRATINS" APPLIED OPTICS, vol. 34, no. 30, 20 octobre 1995, pages 6859-6861, XP000534305 <br> * le document en entier * | 1,24 | **DOMAINES TECHNIQUES RECHERCHES (Int.Cl.6)** <br><br> G02B |
| A,D | US 5 042 898 A (MOREY WILLIAM W ET AL) 27 août 1991 <br> * abrégé; figure 3 * <br> * colonne 4, ligne 21 - colonne 5, ligne 52 * | 1,24 | |

Le présent rapport a été établi pour toutes les revendications

| Lieu de la recherche | Date d'achèvement de la recherche | Examinateur |
|---|---|---|
| LA HAYE | 15 mars 1999 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                  EP 98 40 3155

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-03-1999

| Document brevet cité au rapport de recherche | | Date de publication | Membre(s) de la famille de brevet(s) | | Date de publication |
|---|---|---|---|---|---|
| US 5694503 | A | 02-12-1997 | EP | 0828169 A | 11-03-1998 |
|  |  |  | JP | 10096827 A | 14-04-1998 |
| WO 9726572 | A | 24-07-1997 | AU | 2990397 A | 22-08-1997 |
|  |  |  | AU | 6897396 A | 11-08-1997 |
|  |  |  | CA | 2242676 A | 24-07-1997 |
|  |  |  | CA | 2243200 A | 07-08-1997 |
|  |  |  | EP | 0875012 A | 04-11-1998 |
|  |  |  | EP | 0880718 A | 02-12-1998 |
|  |  |  | WO | 9728480 A | 07-08-1997 |
| EP 0798573 | A | 01-10-1997 | AU | 7332796 A | 07-05-1997 |
|  |  |  | CA | 2207761 A | 24-04-1997 |
|  |  |  | CN | 1166208 A | 26-11-1997 |
|  |  |  | WO | 9714983 A | 24-04-1997 |
| US 5042898 | A | 27-08-1991 | DE | 69020167 D | 20-07-1995 |
|  |  |  | DE | 69020167 T | 26-10-1995 |
|  |  |  | EP | 0507877 A | 14-10-1992 |
|  |  |  | WO | 9110151 A | 11-07-1991 |

EPO FORM P0460

Pour tout renseignement concernant cette annexe : voir Journal Officiel de l'Office européen des brevets, No.12/82